# EUROPÄISCHE PATENTSCHRIFT

(11) **EP 0 419 973 B1**
(45) Veröffentlichungstag und Bekanntmachung des Hinweises auf die Patenterteilung: **11.12.1996**
(21) Anmeldenummer: 90117770.9
(22) Anmeldetag: 14.09.1990
(51) Int. Cl.: H04M 19/02, H04M 3/50, H04M 3/02, H04M 3/42, H04Q 11/04

(54) **Verfahren zum Aktivieren einer optischen Anzeige in einem Kommunikationsendgerät von einer Kommunikationsvermittlungsanlage**
Method for activating an optical display in a communication terminal of a switching exchange
Procédé pour activer un affichage optique dans un terminal de communication d'un système de commutation

(30) Priorität: 29.09.1989 DE 3932684
(43) Veröffentlichungstag der Anmeldung: 03.04.1991
(73) Patentinhaber: SIEMENS AKTIENGESELLSCHAFT, 80333 München (DE)
(72) Erfinder: Gericke, Harald, D-4200 Oberhausen (DE)

(56) Entgegenhaltungen:
- WO-A-85/05749
- DE-A- 3 729 015

## Beschreibung

An digitale Kommunikationsvermittlungsanlagen sind Kommunikationsendgeräte, insbesondere "analoge" Fernsprechendgeräte über "analoge" Anschlußtechnik angeschlossen. Die analogen Sprach-, Wähl- und Rufsignale werden hierbei über zwei symmetrische, verdrillte Kupferleitungen - im weiteren mit analoge Anschlußleitungen - von bzw. zum Kommunikationsendgerät übermittelt. Für die Aktivierung der akustischen Rufeinrichtung in den Kommunikationsendgeräten sind überwiegend niederfrequente Wechselstromsignale - Rufsignale - vorgesehen. Diese wechselstromförmigen Rufsignale werden in digitalen, programmgesteuerten Kommunikationsvermittlungsanlagen überwiegend in einer zentralen Rufgeneratoreinrichtung erzeugt und über Rufleitungen an Leitungsanschlußeinrichtungen geführt. In den Leitungsanschlußein richtungen, die für den Anschluß analoger Kommunikationsendgeräte vorgesehen sind, werden die Rufsignale mit Hilfe von Schaltmitteln, z. B. Relais, an die Adern der Anschlußleitungen schaltet. Durch unterschiedliche Zeitspannen, in denen die Rufsignale an die Anschlußleitungen geschaltet werden, können unterschiedliche Rufrythmen für z. B. Internruf, Externruf usw. bewirkt werden. Die in den Leitungsanschlußeinrichtungen angeordneten Schaltmittel werden durch in der Kommunikationsvermittlungsanlage realisierte Rufprozeduren gesteuert. Hierbei ist jeweils eine programmtechnisch als "Task" realisierte Rufprozedur zum Teil in einer Ein- Ausgabeeinrichtung und zum Teil in den zugehörigen Leitungsanschlußeinrichtungen realisiert. Die Eingabe- Ausgabeeinrichtungen sind für die dynamische Entlastung einer zentralen Prozessoreinrichtung vorgesehen und kommunizieren mit den Leitungsanschlußeinrichtungen mit Hilfe von in beiden Einrichtungen implementierten Datenübermittlungsprozeduren, z. B. der HDLC (High-Data-Link-Control)-Prozedur.

Die Eingabe- Ausgabeeinrichtungen tauschen mit der zentralen Prozessoreinrichtung Informationen über eine Schreib-Lese-Speichereinrichtung - in der Fachwelt auch als "Dual-Port-RAM-Schnittstelle bekannt - aus, in die sowohl von den Eingabe-Ausgabeeinrichtungen als auch von der zentralen Prozessoreinrichtung Informationen einschreibbar und lesbar sind. Hierbei werden in bestimmten Speicherbereichen von den Ein- Ausgabeeinrichtungen und von der zentralen Prozessoreinrichtung Meldungen gespeichert, die jeweils von der anderen Einrichtung fortlaufend gelesen werden. Bei starker dynamischer Belastung der Kommunikationsvermittlungsanlage bilden sich aufgrund des verzögerten Auslesen der Meldungen Informations-Warteschlangen, und damit Zeitverzögerungen, die eine Übermittlung von zeitkritischen Informationen über diese Schreib-Lese-Speichereinrichtungen nicht erlauben.

Eine Kommunikationsvermittlungsanlage mit den vorhergehend erläuterten Eigenschaften ist bereits in der EP-A-0 350 844 vorgeschlagen.

In zunehmendem Maße werden neben den akustischen oder optischen Ausgaben für die Rufsignale zusätzliche optische Anzeigen, z.B. Glimmlampen, eingesetzt, um neue Leistungsmerkmale zu realisieren. Eines dieser neuen Merkmale ist z. B. das Merkmal "Message Waiting". Hierbei wird an einem analogen Kommunikationsendgerät nach dem Ende einer aktuellen Verbindung durch eine zusätzliche optische Anzeige angezeigt, daß während der vorhergehenden aktuellen Verbindung ein weiterer Verbindungsaufbau zu diesem Kommunikationsendgerät versucht wurde. Durch ein anschließendes Betätigen eines entsprechenden Eingabemittels in diesem analogen Kommunikationsendgerät wird mit Hilfe der Kommunikationsvermittlungsanlage automatisch eine Verbindung zu dem den weiteren Verbindungsaufbau initialisierenden Kommunikationsendgerät hergestellt.

Basierend auf der eingangs erläuterten Kommunikationsvermittlungsanlage besteht die Aufgabe der Erfindung darin, diese Kommunikationsanlage so zu ergänzen, daß eine in einem Kommunikationsendgerät angeordnete optische Anzeigeeinrichtung, insbesondere eine Glimmlampe, für eine Realisierung zusätzlicher Leistungsmerkmale aktiviert werden kann. Die Aufgabe wird durch die Merkmale des Anspruchs 1 gelöst.

Der Kerngedanke der Erfindung ist darin zu sehen, daß die Anzeigesignale wie die Rufsignale zentral in einer Takteinrichtung gebildet werden und abwechselnd mit den Rufsignalen über die vorhandene Rufleitung zu den Leitungsanschlußeinrichtungen übermittelt werden. Bei einer zentralen Erzeugung und Verteilung der Anzeigesignale ist wegen der zeitkritischen abwechselnden Übermittlung von Ruf- und Anzeigesignalen in der Schreib-Lese-Speichereinrichtung eine zusätzliche, kurze Übermittlungszeiten sicherstellende Schnittstelle erforderlich. Dies wird durch ein Anordnen eines separierten Speicherbereichs in der Schreib-Lese-Speichereinrichtung erreicht. In diesem kleinen separierten Speicherbereich werden Initialisierungsinformationen - wenige Bits - von der zentralen Prozessoreinrichtung eingeschrieben. Diese Initialisierungsinformation zeigt an, ob Rufsignale oder Anzeigesignale aktuell über die Rufleitung übermittelt werden. Der separierte Speicherbereich wird mit Hilfe einer "Interrupt-Prozedur" zyklisch daraufhin abgefragt, welche Initialisierungsinformation vorliegt. Nach dem erstmaligen Erkennen einer geänderten Initialisierungsinformation werden mit Hilfe einer Ruf-Anzeige-Prozedur, die jeweils in den Eingabe- Ausgabeeinrichtungen und den zugehörigen Leitungsanschlußeinrichtungen implementiert sind, die Schaltmittel in den Leitungsanschlußeinrichtungen gesteuert. Mit Hilfe der Ruf-Anzeige-Prozedur werden die von den in der Kommunikationsvermittlungsanlage implementierten Vermittlungsprozeduren übermittelten Anforderungen zum Übermitteln von Rufsignalen oder Anzeigesignalen für die jeweiligen Kommunikationsendgeräte bewertet und die entsprechenden Vorgänge, wie z. B. Steuern des Schaltmittels in der Leitungsanschlußeinrichtung, gesteuert. Nach Abarbeiten aller Anforderungen von den Vermittlungsprozeduren wird in der Ruf-Anzeige-Prozedur eine Endeinformation gebildet und in einem weiteren separierten Speicherbereich der zugehörigen Schreib-Lese-Speichereinrichtung geschrieben. Diese weiteren separierten Speicherbereiche werden von der zentralen Prozessoreinrichtung mit Hilfe einer "Interrupt"-Prozedur zyklisch abgefragt. Liegt in allen weiteren separierten Speicherbereichen aller Schreib-Lese-Speichereinrichtungen eine Endeinformation vor, so wird in der zentralen Prozessoreinrichtung erneut eine Initialisierungsinformation gebildet und in den separierten Speicherbereich eingeschrieben.

Der wesentliche Vorteil des erfindungsgemäßen Kommunikationssystems ist darin zu sehen, daß durch Hinzufügen einer einzigen zusätzlichen zentralen Gleichspannungsquelle, einschließlich eines zusätzlichen Schaltmittels und dem Einfügen einer "schnellen" Schnittstelle zwischen den Ein- Ausgabeeinrichtungen und der zentralen Prozessoreinrichtung annähernd alle bereits vorhandenen physikalischen und programmtechnischen Komponenten der eingangs erläuterten Kommunikationsvermittlungsanlage unverändert weiter benutzt werden können.

Nach einer weiteren vorteilhaften Ausgestaltung der Erfindung ist das zusätzliche Schaltmittel durch Relais oder durch logische, integrierte, wirksam schaltbare Schaltkreistechnik realisierbar. Bei den integrierten, wirksam schaltbaren Schaltkreistechniken handelt es sich um logische Schaltkreise, die Ausgänge vom Dreizustandstyp aufweisen. Durch die Möglichkeit des Wirksam- bzw. Unwirksamschaltens der Ausgänge bei dieser Schaltkreistechnik ist die Realisierung von Relais-Funktionen möglich.

Besonders vorteilhaft ist die optische Anzeige im Kommunikationsgerät durch eine Glimmplampe realisierbar - siehe Anspruch 4. Diese Glimmlampe wird parallel zur seriell angeordneten Kondensator-Klingeleinrichtung geschaltet. Durch Verwenden einer Glimmlampe kann diese und die Klingeleinrichtung separat angesteuert werden. Hierbei ist die Bedingung, daß das Spannungspotential der Rufsignale unter der Zündspannung der Glimmlampe liegt, zu beachten - siehe Anspruch 5. Rufsignale, deren Spannungspotential unter der Zündspannung der Glimmlampe liegen, aktiveren über den Kondensator die Klingeleinrichtung, jedoch nicht die zusätzliche optische Anzeige im Kommunikationsendgerät. Die Anzeigesignale weisen eine Gleichspannung auf, die über der Zündspannung der Glimmlampe liegen. Gelangen diese Anzeigesignale an das Kommunikationsendgerät, so wird nur die Glimmlampe aktiviert, da die gleichstromförmigen Anzeigesignale durch den Kondensator gesperrt werden.

Im folgenden wird das erfindungsgemäße Kommunikationssystem anhand eines Blockschaltbildes näher erläutert.

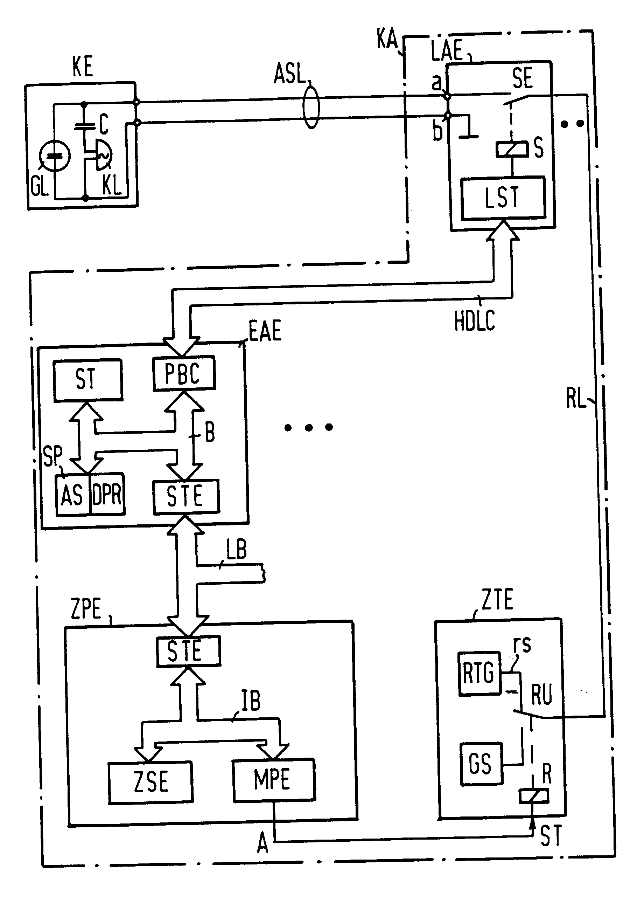

Figur 1 zeigt eine zentrale Prozessoreinrichtung ZPE, die durch eine zentrale Speichereinrichtung ZSE, eine Mikroprozessoreinrichtung MPE und eine Schnittstelleneinrichtung STE gebildet ist. Die Mikroprozessoreinrichtung MPE ist beispielsweise durch einen Mikroprozessor 80 268 der Firma Intel realisiert. Der aus Adress-, Daten- und Steuerleitungen gebildete interne Bus IB wird über die Schnittstelleneinrichtung STE auf einen ebenfalls durch Daten-, Adress- und Steuerleitungen gebildeten lokalen Bus LB geführt. Die zentrale Speichereinrichtung ZSE enthält im wesentlichen die Datenbasis und den Arbeitsspeicher für die Mikroprozessoreinrichtung MPE. Mit Hilfe der Mikroprozessoreinrichtungen MPE wird die vermittlungstechnische und sicherheitstechnische Steuerung der Kommunikationsvermittlungsanlage KA durchgeführt. Ein Ausgang A der Mikroprozessoreinrichtung MPE ist auf einen Steuereingang ST einer zentralen Takteinrichtung ZTE geführt. Der Steuereingang ST der zentralen Takteinrichtung ZTE ist mit einem Relais R verbunden. Über dieses Relais R wird von der Mikroprozessoreinrichtung MPE der Umschalter RU gesteuert. An einem der Umschaltekontakte des Umschalters RU ist ein Ruftongenerator RTG angeschlossen. Der andere Umschaltekontakt des Umschalters RU ist mit einer Gleichstromspannungsquelle GS verbunden. In dem Ruftongenerator werden beispielsweise wechselstromförmige Rufsignale rs mit einer Frequenz von 16 2/3, 20 und 25 Hz und einer Wechselspannung von 60 Volt erzeugt. Die Gleichspannungsquelle GS ist beispielsweise durch eine Stromversorgung mit einem Spannungspotential von 130 Volt-Gleichspannung realisiert. Diese 130 Volt-Gleichspannung repräsentiert die Anzeigesignale as. Der Mittenkontakt des Umschalters RU ist über eine Rufleitung RL mit einem in einer Leitungsanschlußeinrichtung LAE angeordneten Schaltelement SE verbunden. Dieses Schaltelement SE kann, wie dargestellt durch ein Relais S aber auch durch integrierte, wirksam schaltbare Schaltmittel realisiert sein. Dieses Relais S wird über eine entsprechende Verbindung von einer die Abläufe in der Leitungsanschlußeinrichtung LAE koordinierenden Leitungssteuerung LST gesteuert. Der andere Kontakt des Schaltelementes SE ist mit einer Ader - beispielsweise der A-Ader - einer Anschlußleitung ASL verbunden. Die jeweils andere Ader der Anschlußleitung ASL ist auf Erdpotential geführt. Die üblicherweise durch symmetrische, verdrillte Kupferleitungen realisierten Anschlußleitungen ASL sind jeweils an ein von der Kommunikationsvermittlungsanlage KA entferntes Kommunikationsendgerät geführt. Im Ausführungsbeispiel sind nur die zur Erläuterung der Erfindung erforderlichen Komponenten des Kommunikationsendgerätes KE dargestellt. Für die akustische Ausgabe der Rufsignale rs ist die bekannte Serienschaltung eines Kondensators C und einer Klingeleinrichtung KL vorgesehen. Hierbei ist ein Ende des Kondensators C und ein Anschluß der Klingeleinrichtung KL mit der A- bzw. B-Ader der Anschlußleitung ASL verbunden. Parallel zu dieser Serienschaltung aus einem Kondensator C und der Klingeleinrichtung KLE ist eine Glimmlampe GL angeordnet. Für das Ausführungsbeispiel sei angenommen, daß die Glimmlampe eine Zündspannung von 110 Volt-Gleichspannung aufweist.

Die Leitungssteuerung LST der Leitungsanschlußeinrichtung LAE ist über eine entsprechende Verbindung mit einer Eingabe- Ausgabeeinrichtung EAE verbunden. Über diese als einzelne Leitung realisierte Verbindung werden die Informationen bzw. Daten zwischen der Leitungssteuerung ST und der Eingabe- Ausgabeeinrichtung EAE ausgetauscht. Für die Steuerung dieser Informationen ist eine Datenübermittlungsprozedur HDLC, z.B. die HDLC (High Data Linc Controll)-Prozedur vorgesehen. Für die Steuerung dieser Übermittlungsprozedur HDLC wird sowohl in der Leitungssteuerung LST als auch in der Eingabe- Ausgabeeinrichtung EAE eine Protokollsteuereinrichtung PBC eingesetzt. Da die HDLC-Prozedur für den Austausch von Daten, Befehlen und Meldungen in vielen einschlägigen praktisch realisierten Systemen benutzt wird, sind entsprechende Übermittlungsbausteine in Form integrierter Schaltkreise realisiert. Die dargestellte Kommunikationsvermittlungsanlage nutzt diese Bausteine (HDLC-Controler) in der üblichen Weise so, so daß keine Hardware- oder Softwareanpassung für den Einsatz dieser Bausteine in der Kommunikationsvermittlungsanlage erforderlich sind.

Die Eingabe- Ausgabeeinrichtung EAE enthält desweiteren eine Steuereinrichtung SE und eine Speichereinrichtung SP. Die Speichereinrichtung SP ist in einen nur der Steuereinrichtung ST zugeordneten Speicherbereich AS und in eine Schreib- Lese-Speichereinrichtung DPR unterteilt. Die Eingabe- Ausgabeeinrichtung EAE ist des weiteren über eine Schnittstelleneinrichtung STE mit dem lokalen Bus LB verbunden. Alle Einrichtungen PBC, ST, SP und STE sind über einen aus Adress-, Daten- und Steuerleitungen gebildeten Bus B verbunden. An eine zentrale Prozessoreinrichtung ZPE sind beispielsweise über den lokalen Bus LB vier Eingabe- Ausgabeeinrichtungen EAE anschließbar. An die Eingabe- Ausgabeeinrichtungen EAE können beispielsweise jeweils acht Leitungsanschlußeinrichtungen LAE gekoppelt werden. An eine Leitungsanschlußeinrichtung LAE können beispielsweise sechzehn anologe Kommunikationsendgeräte KE über Anschlußleitungen ASL angeschlossen werden.

Für das Ausführungsbeispiel sei angenommen, daß von der zentralen Prozessoreinrichtung ZPE über den Steuereingang ST der Umschalter RU so gesteuert wird, daß Rufsignale rs über die Rufleitung RL an die Schalteinheit SE gelangen. Hierbei wird zu Beginn dieser Umschaltung in der zentralen Prozessoreinrichtung ZPE eine Initialisierungsinformation gebildet und über die Schnittstelleneinrichtungen STE und den loken Bus an einen separierten Speicherbereich der Schreib- Lese-Speichereinrichtung DPR übermittelt. Mit Hilfe dieser Initialisierungsinformation wird angezeigt, daß aktuell Rufsignale rs über die Rufleitung RL übermittelt werden. Mit Hilfe einer in der Steuereinrichtung ST implementierten "Interrupt-Prozedur" wird dieser separierte Speicherbereich zyklisch abgefragt und nach dem Feststellen der aktuell übermittelten Initialisierungsinformation eine in der Steuereinrichtung ST und der Leitungssteuereinrichtung LST implementierte Ruf-Anzeige-Prozedur gestartet. Mit Hilfe dieser Ruf-Anzeige-Prozedur werden die Relais S und damit die Schaltelemente SE derart gesteuert, daß über die Anschlußleitungen ASL jeweils die gewünschten Rufsignale rs in den geforderten Rufrythmen übermittelt werden. Nach dem Abarbeiten aller an die Ruf-Anzeige-Prozedur übermittelten Anforderungen zum Anschalten von Rufsignalen rs an die jeweiligen Anschlußleitungen wird von der Ruf-Anzeige-Prozedur eine Endeinformation gebildet und in einem weiteren separierten Speicherbereich der Schreib-Lese-Speichereinrichtung DPR eingeschrieben. Dieser weitere separierte Speicherbereich wird von einer in der zentralen Prozessoreinrichtung ZPE implementierten "Interrupt"-Prozedur zyklisch abgefragt und das Vorliegen einer Endeinformation im Speicher der zentralen Prozessoreinrichtung ZPE vermerkt. Liegen von allen an die zentrale Prozessoreinrichtung ZPE angeschlossenen Eingabe- Ausgabeeinrichtungen Endeinformationen vor, wird in der zentralen Prozessoreinrichtung ZPE eine Initialisierungsinforamtion gebildet, die anzeigt, daß Anzeigesignale as über die Rufleitung RL übermittelt werden. Gleichzeitig wird über den Ausgang A der zentralen Prozessoreinrichtung ZPE der Umschalter RU umgesteuert. Mit Hilfe der "Interrupt"-Prozedur werden die geänderten Initialisierungsinformationen in dem separierten Speicherbereich Schreib-Lese-Speichereinrichtung DPR erkannt und die Ruf-Anzeige-Prozedur gestartet. Mit Hilfe dieser Ruf-Anzeige-Prozedur werden die Anzeigesignale as über das Schaltelement SE und über die Anschlußleitung ASL zu den betroffenen Kommumikationsendgeräten übermittelt. Die 130 Volt-Gleichstrom aufweisenden Anzeigesignale as zünden in den betroffenen Kommunikationsendeinrichtungen KE die Glimmlampen GL. Diese Glimmlampen GL leuchten solange, solange die Anzeigesignale as durch den Umschalter RU über die Rufleitung RL und die Schaltelemente SE an die Anschlußleitungen ASL geschaltet werden.

## Patentansprüche

1. Verfahren zur Aktivierung einer optischen Anzeige (GL) in einem an eine Kommunikationsvermittlungsanlage (KA) über analoge Anschlußleitungen (ASL) bzw. Anschlußtechnik (LAE) angeschlossenen Kommunikationsendgerät (KE), bei dem die Kommunikationsvermittlungsanlage (KA) mit einer die vermittlungstechnische Steuerung und sicherheitstechnische Steuerung und Koordinierung durchführenden zentralen Prozessoreinrichtung (ZPE) und mindestens einer die zeitkritische Steuerung von Leitungsanschlußeinrichtungen (LAE) übernehmenden Eingabe- Ausgabeprozessoreinrichtung (EAE) ausgestattet ist und jeweils in den Leitungsanschlußeinrichtungen (LAE) mit Hilfe von Schaltmitteln (SE) wechselstromförmige Rufsignale (rs) mit unterschiedlichen Rufrythmen an die Anschlußleitung (ASL) anschaltbar sind, wobei die Schaltmittel (SE) durch eine in den Eingabe-Ausgabeeinrichtungen (EAE) und Leitungsanschlußeinrichtungen (LAE) implementierte Rufprozedur gesteuert werden und die Rufsignale (rs) in einem Ruftongenerator (RTG) in einer zentralen Takteinrichtung (ZTE) erzeugt und über eine Rufleitung (RL) an die Leitungsanschlußeinrichtungen (LAE) verteilt werden und bei dem für den Meldungsaustausch zwischen der Kommunikationsvermittlungsanlage (KA) und der Eingabe- und Ausgabeprozessoreinrichtung (EAE) in dieser eine vom Betriebssystem der Kommunikationsvermittlungsanlage (KA) gesteuerte Schreib-Lese-Speichereinrichtung (DPR) angeordnet ist,
**dadurch gekennzeichnet,**
daß in der zentralen Takteinrichtung (ZTE) mit Hilfe eines zusätzlichen zentralen Schaltmittels (RU) entweder die im Ruftongenerator (RTG) gebildeten Rufsignale (rs) oder in einer zusätzlichen Gleichspannungsquelle (GS) gebildete Anzeigesignale (as) an die Rufleitung (RL) anschaltbar sind, daß das zentrale Schaltmittel (RU) durch die zentrale Prozessoreinrichtung (ZPE) gesteuert wird, daß von der zentralen Prozessoreinrichtung (ZPE) in einen separierten Speicherbereich der Schreib-Lese-Speichereinrichtung (DPR) eine die Ubermittlung der Ruf- oder Anzeigesignale (rs, as) an die Kommunikationsendgeräte (KE) einleitende Initialisierungsinformation eingeschrieben wird, daß bei einem durch zyklisches Abfragen des separierten Speicherbereichs festgestellten Vorliegen einer Initialisierungsinformation mit Hilfe einer um eine Anzeigeprozedur ergänzten Ruf-Anzeige-Prozedur die betroffenen Schaltmittel (SE) in den zugehörigen Leitungsanschlußeinrichtungen (LAE) zeitgerecht gesteuert werden, daß nach der Abarbeitung aller in der Ruf-Anzeige-Prozedur vorliegenden Ruf- oder Anzeigesignal-Ubermittlungsanforderungen in jeder Eingabe- und Ausgabeeinrichtung (EAE) eine Endeinformation gebildet und in einem weiteren separierten Speicherbereich der Schreib-Lese-Speichereinrichtung (DPR) eingeschrieben wird und daß nach dem durch die zentrale Prozessoreinrichtung (ZPE) durch zyklisches Abfragen erfolgten Feststellen von Endeinformationen in allen Eingabe-Ausgabeeinrichtungen (EAE) von der zentralen Prozessoreinrichtung (ZPE) eine weitere Initialisierungsinformation in die Schreib-Lese-Speichereinrichtung (DPR) einlesbar ist.

2. Verfahren nach Anspruch 1,
**dadurch gekennzeichnet,**
daß die Initialisierungsinformation durch eine die aktuelle Anschaltung der Rufsignale (rs) oder Anzeigesignale (as) an die Rufleitung (RL) anzeigende Informationen gebildet ist.

3. Verfahren nach mindestens einem der vorhergehenden Ansprüche,
**dadurch gekennzeichnet,**
daß die Schaltmittel (RU, ES) durch Relais oder durch logische, integrierte, wirksam schaltbare Schaltkreistechnik realisierbar sind.

4. Verfahren nach mindestens einem der vorhergehenden Ansprüche,
**dadurch gekennzeichnet,**
daß die optische Anzeige (GL) im Kommunikationsendgerät (KE) durch eine parallel zur Kondensator-Klingeleinrichtung (C, KL) geschaltete Glimmlampe (GL) realisiert ist.

5. Verfahren nach Anspruch 4,
**dadurch gekennzeichnet,**
daß das Spannungspotential der Rufsignale (rs) unter der Zündspannung der Glimmlampe (GL) liegt.

## Claims

1. Method for activating an optical display (GL) in a communication terminal (KE) connected to a communication exchange (KA) via analog subscriber lines (ASL) and line connection units (LAE), in which arrangement the communication exchange (KA) is equipped with a central processor unit (ZPE), carrying out the switching-related control and safety-related control and coordination, and with at least one input/output processor unit (EAE), assuming the time-critical control of line connection units (LAE), and in the line connection units (LAE) switching means (SE) can be respectively used to switch a.c. ringing signals (rs) with different ringing cadences to the subscriber line (ASL), the switching means (SE) being controlled by a ringing procedure implemented in the input/output units (EAE) and line connection units (LAE), and the ringing signals (rs) being generated in a ringing tone generator (RTG) in a central clock unit (ZTE) and distributed via a ringdown line (RL) to the line connection units (LAE), and in which arrangement, for the exchanging of messages between the communication exchange (KA) and the input/output processor unit (EAE), in the latter there is arranged a read/write memory unit (DPR), controlled by the operating system of the communication exchange (KA), characterized in that in the central clock unit (ZTE) an additional central switching means (RU) can be used to switch either the ringing signals (rs) formed in the ringing tone generator (RTG) or display signals (as) formed in an additional d.c. voltage source (GS) to the ringdown line (RL), in that the central switching means (RU) is controlled by the central processor unit (ZPE), in that an initialization information item, initiating the transmission of the ringing or display signals (rs, as) to the communication terminals (KE), is written from the central processor unit (ZPE) into a separate memory area of the read/write memory unit (DPR), in that, in the case of presence of an initialization information item, established by cyclical polling of the separate memory area, a ringing/display procedure supplemented by a display procedure is used to control the proper timing of the relevant switching means (SE) in the associated line connection units (LAE), in that, after the execution of all ringing-signal or display-signal transmission requests present in the ringing/display procedure, an end information item is formed in each input/output unit (EAE) and is written into a further separate memory area of the read/write memory unit (DPR) and in that, after the establishing of end information items in all the input/output units (EAE), performed by the central processor unit (ZPE) by means of cyclical polling, a further initialization information item can be read into the read/write memory unit (DPR) by the central processor unit (ZPE).

2. Method according to Claim 1, characterized in that the initialization information item is formed by an information item indicating the current switching of the ringing signals (rs) or display signals (as) to the ringdown line (RL).

3. Method according to at least one of the preceding claims, characterized in that the switching means (RU, ES) can be realized by relays or by logical, integrated, activatable circuitry.

4. Method according to at least one of the preceding claims, characterized in that the optical display (GL) in the communication terminal (KE) is realized by a glow-discharge lamp (GL) connected in parallel with the capacitor/bell unit (C, KL).

5. Method according to Claim 4, characterized in that the voltage potential of the ringing signals (rs) lies below the starting voltage of the glow-discharge lamp (GL).

## Revendications

1. Procédé d'activation d'un affichage optique (GL) dans un terminal (KE) de communication connecté à un central (KA) de communication par l'intermédiaire de lignes analogiques (ASL) de raccordement ou d'un dispositif technique (LAE) de raccordement analogique, dans lequel le central (KA) de communication est équipé d'un dispositif (ZPE) central à processeur effectuant la commande de commutation, la commande de sécurité et la coordination et d'au moins un dispositif (EAE) à processeur d'entrée-sortie prenant en charge la commande urgente de dispositifs (LAE) de raccordement de lignes et dans lequel on peut appliquer, dans les dispositifs (LAE) de raccordement de lignes, à l'aide de moyens (SE) de branchement, des signaux (rs) d'appel à courant alternatif ayant des rythmes d'appels différents à la ligne (ASL) de raccordement, on commande les moyens (SE) de branchement par une procédure d'appel mise en oeuvre dans les dispositifs (EAE) d'entrée-sortie et dans les dispositifs (LAE) de raccordement de lignes, on produit les signaux (rs) d'appel dans un générateur (RTG) de tonalité d'appel dans un dispositif (ZTE) central de cadencement, on les distribue par l'intermédiaire d'une ligne (RL) d'appel aux dispositifs (LAE) de raccordement de lignes et dans lequel il est disposé, pour l'échange de messages entre le central (KA) de communication et le dispositif (EAE) à processeur d'entrée-sortie, dans celui-ci, un dispositif (DPR) à mémoire d'écriture et de lecture commandé par le système d'exploitation du central (KA) de communication,
caractérisé en ce que
on applique, dans le dispositif (ZTE) central de cadencement, à la ligne (RL) d'appel, à l'aide d'un moyen (RU) central supplémentaire de branchement, soit les signaux (rs) d'appel formés dans le générateur (RTG) de tonalité d'appel, soit les signaux d'affichage formés dans une source (GS) supplémentaire de tension continue, on commande le moyen (RU) central de branchement par le dispositif (ZPE) central à processeur, on écrit,par le dispositif (ZPE) central à processeur, dans une zone de mémoire distincte du dispositif (DPR) à mémoire d'écriture et de lecture, une information d'initialisation déclenchant la transmission des signaux (rs, as) d'appel ou d'affichage aux terminaux (KE) de communication, on commande à temps, lorsque l'on a constaté la présence d'une information d'initialisation en interrogeant cycliquement la zone de mémoire distincte, dans les dispositifs (LAE) de raccordement de lignes associés, les moyens (SE) concernés de branchement à l'aide d'une procédure d'appel-d'affichage complétée par une procédure d'affichage, on forme, après avoir traité toutes les demandes de transmission de signaux d'appels ou d'affichage présentes dans la procédure d'appel-d'affichage, une information de fin dans chaque dispositif (EAE) d'entrée et de sortie, on l'écrit dans une zone de mémoire supplémentaire et distincte du dispositif (DPR) à mémoire d'écriture et de lecture, et, après que l'on a constaté la présence d'informations de fin dans tous les dispositifs (EAE) d'entrée-sortie en interrogeant cycliquement , on peut mémoriser par le dispositif (ZPE) central à processeur, dans le dispositif (DPR) à mémoire d'écriture et de lecture,une information supplémentaire d'initialisation.

2. Procédé suivant la revendication 1,
caractérisé en ce que
l'information d'initialisation est formée d'informations indiquant l'application actuelle des signaux (rs) d'appel ou de signaux (as) d'affichage à la ligne (RL) d'appel.

3. Procédé suivant au moins l'une des revendications précédentes,
caractérisé en ce que
les moyens (RU,ES) de branchement peuvent être mis en oeuvre par des relais ou par une technique à circuits logiques intégrés pouvant être branchés à l'état actif.

4. Procédé suivant au moins l'une des revendications précédentes,
caractérisé en ce que
l'affichage optique (GL) est mis en oeuvre dans le terminal (KE) de communication par une lampe (GL) fluorescente branchée en parallèle avec le dispositif (C, KL) de sonnerie à condensateur.

5. Procédé suivant la revendication 4,
caractérisé en ce que
le potentiel des signaux (rs) d'appel est inférieur à la tension d'allumage de la lampe fluorescente (GL).
